# EUROPEAN PATENT SPECIFICATION

(11) **EP 3 211 874 B1**
(45) Date of publication and mention of the grant of the patent: **19.05.2021**
(21) Application number: 17157772.9
(22) Date of filing: 24.02.2017
(51) Int. Cl.: H04N 1/00, H04N 1/327, H04N 1/333

(54) **IMAGE FORMING APPARATUS AND METHOD FOR CONTROLLING IMAGE FORMING APPARATUS**
BILDERZEUGUNGSVORRICHTUNG UND VERFAHREN ZUR STEUERUNG DER BILDERZEUGUNGSVORRICHTUNG
APPAREIL DE FORMATION D'IMAGES ET PROCÉDÉ DE COMMANDE D'APPAREIL DE FORMATION D'IMAGES

(30) Priority: 24.02.2016 JP 2016033404
(43) Date of publication of application: 30.08.2017
(73) Proprietor: Kyocera Document Solutions Inc., Osaka-shi, Osaka 540-8585 (JP)
(72) Inventor: MAEDA, Tetsuya, Osaka, 540-8585, (JP); TANAKA, Chigusa, Osaka, 540-8585, (JP)
(74) Representative: Beetz & Partner mbB

(56) References cited:
- JP-A- 2004 260 405
- JP-A- 2005 101 884
- US-A1- 2008 198 412
- US-A1- 2013 070 295
- US-A1- 2014 185 101
- US-A1- 2015 296 097

## Description

### BACKGROUND

The present disclosure relates to an image forming apparatus that, based on image data obtained by reading a document, performs a job.

An image forming apparatus may be equipped with a scanner for reading in an image of a document. Through such reading-in by the scanner, image data is obtained. The image data thus obtained is used for a job such as copying or transmission. There is known one example of an apparatus that includes a scanner and transmits image data obtained through reading-in, which is described below.

To be specific, there is known an image processing apparatus that sequentially reads placed documents, stores read images thereof thus read by adding them to a prescribed file, and generates unit-of-reading information that represents the number of read documents in a case where the placed documents have been read. Further, the image processing apparatus, after completing the reading of the placed documents, issues an instruction as to whether to execute reading of another document by a reading device or to end the reading, and unless an instruction to end the reading is issued, every time a document is placed, executes such reading, storing, and generation. In a case where the instruction to end the reading is issued, based on the generated unit-of-reading information, the image processing apparatus splits the read images in the prescribed file into groups, converts the groups of the read images thus obtained by the splitting into files each having a designated file format, respectively, and transmits the files thus obtained by the conversion to designated transmission destinations, respectively. Using this configuration, the image processing apparatus is intended to transmit read images of a document having a plurality of pages in a desired unit of splitting.

In an image forming apparatus including a scanner, such as a multi-functional peripheral, a document conveyance device may be provided. The document conveyance device automatically conveys a placed document on a page-by-page basis in a continuous manner to a read-in position. Then, the document conveyed thereto is read (feed reading-in). This spares a user the trouble of placing a document on a page-by-page basis. Some types of documents such as books and newspapers cannot be conveyed by the document conveyance device. To cope therewith, this type of image forming apparatus is also configured so that a document can be placed on a table (contact glass) on a page-by-page basis to be read thereon (table reading-in).

Furthermore, an image forming apparatus may be equipped with a continuous read-in function. The continuous read-in function is a function in which, even after completion of reading in one document, reading-in of another document placed next is continuously performed. In the continuous read-in function, until a user makes an input to end reading-in, a job based on image data obtained through the reading-in is not started. For example, in a case where a transmission job is performed based on table reading-in without using the continuous read-in function, the transmission job is started upon reading-in of each page of a document. With the use of the continuous read-in function, image data of a plurality of pages can be transmitted collectively by performing a transmission job once.

The continuous read-in function may be used also in feed reading-in. Reading-in and placing of a document bundle are performed repeatedly. After feed reading-in of all documents has been performed, an input to end the reading-in is made. This allows image data of all the documents to be processed by performing a job once. Even in a case of a document having a large number of pages, there is no need to perform repeatedly setting of jobs such as copying and transmission.

In a case of a document having only one page or in a case where all documents can be placed at a time in the document conveyance device, there is no need to use the continuous read-in function. This is the reason why, conventionally, the use of the continuous read-in function requires to perform setting for using the continuous read-in function. Prior to a start of reading-in, a user operates an operation panel. There is, however, a problem of inconvenience that, for each job, setting for using the continuous read-in function should be performed on the operation panel. Furthermore, in some cases, a user might forget to perform setting for using the continuous read-in function.

It is conceivable to change basic settings (default settings) of the image forming apparatus so that the continuous read-in function is always used regardless of a type of a job. In this case, however, the continuous read-in function automatically comes into play even when not desired to be used. A user must make an input to end the continuous read-in function. There is, therefore, a problem that this might give the user a sense of botheration.

According to the above-mentioned known type of image processing apparatus, image data of documents each having a plurality of pages can be categorized into groups. This is a technique in which the image data is then transmitted group by group. This technique, however, has little relevance to the problems with the continuous read-in function.

The above-described problems, therefore, cannot be solved thereby
Patent document US2015296097 discloses an image processing apparatus with continuous reading processing features wherein automatic transmission is performed if a timeout occurs during execution of continuous reading processing and a function for confirmation by a user is not set for the job. The image processing apparatus does not perform the automatic transmission if a timeout occurs during the execution of the continuous reading processing and the function for confirmation by the user is set for the job.

### SUMMARY

An image forming apparatus according to the present invention is defined in claim 1. A method of controlling an image forming apparatus according to the present invention is defined in claim 8.

Further features and advantages of the present disclosure will become more apparent from the description of an embodiment given below.

### BRIEF DESCRIPTION OF THE DRAWINGS

FIG. 1 is a diagram showing one example of a multi-functional peripheral according to an embodiment.
FIG. 2 is a diagram showing one example of a document conveyance portion and an image reading portion according to the embodiment.
FIG. 3 is a diagram showing one example of the document conveyance portion and the image reading portion according to the embodiment.
FIG. 4 is a diagram showing one example of a transmission basic screen in the multi-functional peripheral according to the embodiment.
FIG. 5 is a diagram showing one example of a manual setting screen for manually setting a continuous read-in mode according to the embodiment.
FIG. 6 is a diagram showing one example of an automatic continuous read-in setting screen according to the embodiment.
FIG. 7 is a flow chart showing one example of a flow of judging on the use of the continuous read-in mode according to the embodiment.
FIG. 8 is a flow chart showing one example of a flow of processing in the continuous read-in mode according to the embodiment.
FIG. 9 is a diagram showing one example of a read-in check screen displayed in the continuous read-in mode according to the embodiment.

### DETAILED DESCRIPTION

The present disclosure is to bring automatically an image forming apparatus to a continuous read-in mode only when necessary. The present disclosure eliminates erroneous transmission in which image data of only one page is transmitted. The present disclosure enhances the usability of an image forming apparatus.

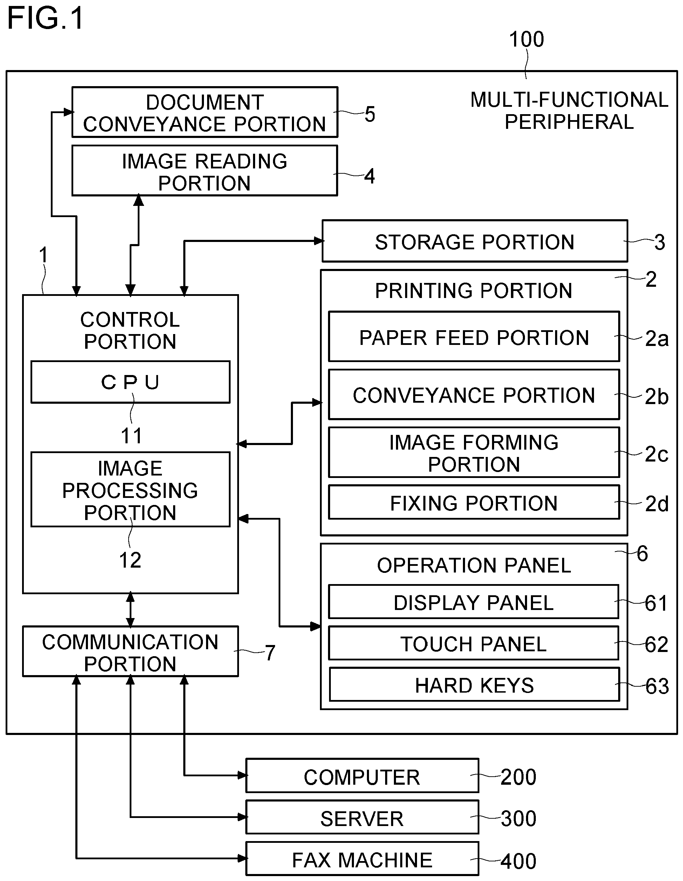

With reference to FIG. 1 to FIG. 9, the following describes an embodiment of the present disclosure. As an image forming apparatus, a multi-functional peripheral 100 is exemplarily used. It should be noted, however, that various factors including a configuration, an arrangement, and so on, which are described in this embodiment, do not limit the scope of the disclosure thereto and are merely illustrative examples.

### (Multi-functional Peripheral 100)

With reference to FIG. 1, a description is given of one example of the multi-functional peripheral 100 according to the embodiment. As shown in FIG. 1, in the multi-functional peripheral 100, a control portion 1 (main control substrate), a printing portion 2, and a storage portion 3 are provided. Furthermore, the multi-functional peripheral 100 includes an image reading portion 4, a document conveyance portion 5, and an operation panel 6.

The control portion 1 is responsible for overall control of the multi-functional peripheral 100. The control portion 1 includes a CPU 11. In the multi-functional peripheral 100, the storage portion 3 is provided. The storage portion 3 includes a nonvolatile memory such as a ROM, an HDD, or a flash ROM. Furthermore, the storage portion 3 also includes a volatile memory such as a RAM. The storage portion 3 stores control-related programs and data. By using the programs and data of the storage portion 3, the control portion 1 controls the various portions. In a job such as copying or transmission, the control portion 1 controls scanning, printing, transmission, and storing of image data. In the control portion 1, an image processing portion 12 is provided. The image processing portion 12 performs image processing with respect to image data outputted from the image reading portion 4.

The operation panel 6 includes a display panel 61, a touch panel 62, and hard keys 63. The touch panel 62 is used to detect a touch position touched by a user. Based on an output of the touch panel 62, the control portion 1 recognizes an operation image operated. The operation image is an image such as a key or a button displayed on the display panel 61. The hard keys 63 include a start key and a numeric keypad. The start key is a key for issuing an instruction to start execution of a job. The numeric keypad is a group of keys for inputting numerals. The operation panel 6 accepts a setting operation with respect to the touch panel 62 and the hard keys 63. The operation panel 6 accepts a setting operation related to a job such as scanning or copying. The control portion 1 recognizes a set content by communicating with the operation panel 6. Furthermore, the control portion 1 controls the display panel 61 to display a status of the multi-functional peripheral 100, various types of messages, and a setting screen.

The printing portion 2 includes a paper feed portion 2a, a conveyance portion 2b, an image forming portion 2c, and a fixing portion 2d. The paper feed portion 2a feeds a paper sheet. The conveyance portion 2b conveys the paper sheet. Furthermore, the conveyance portion 2b ejects the paper sheet after being printed to outside the apparatus. Based on image data, the image forming portion 2c forms a toner image. The image forming portion 2c transfers the toner image on the paper sheet as conveyed thereto. The fixing portion 2d fixes the transferred toner image on the paper sheet. The control portion 1 controls an operation of the printing portion 2.

The multi-functional peripheral 100 includes a communication portion 7. Via a network, a cable, or a public line, the communication portion 7 is communicably connected to a computer 200 such as a PC, a server 300, and a fax machine 400. The control portion 1 controls the communication portion 7 to transmit an email message (email transmission). An email address on the computer 200 can be set as a destination. Image data based on reading-in of a document can be attached to an email message. Furthermore, the control portion 1 controls the communication portion 7 to transmit, toward a shared folder, image data based on reading-in of a document (SMB transmission). A shared folder of the computer 200 can be set as a destination. The control portion 1 controls the communication portion 7 to transmit, toward the server 300, image data based on reading-in of a document (FTP transmission). Any one of folders of the server 300 can be set as a destination. Furthermore, the control portion 1 controls the communication portion 7 to transmit, toward the fax machine 400 set as a destination, image data based on reading-in of a document (facsimile transmission).

### (Image Reading Portion 4 and Document Conveyance Portion 5)

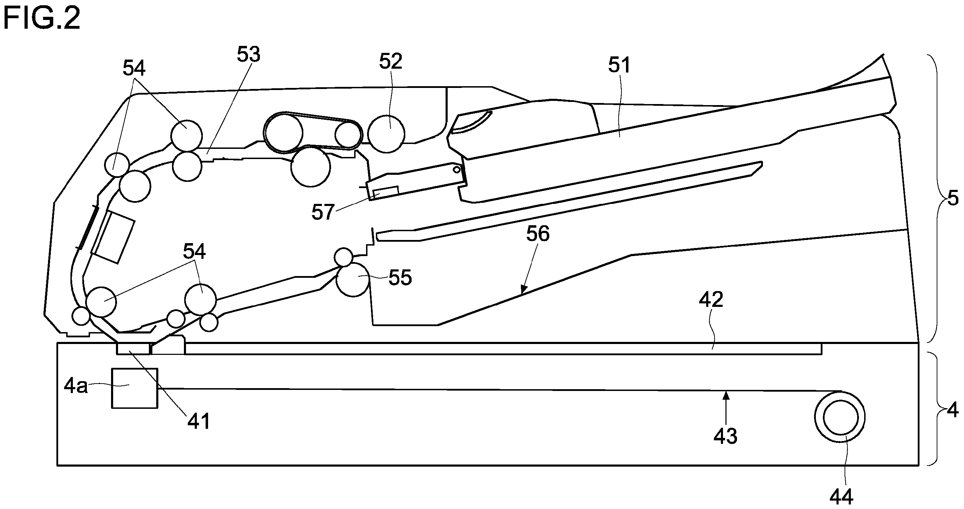

Next, with reference to FIG. 1 to FIG. 3, a description is given of one example of the image reading portion 4 and the document conveyance portion 5 according to the embodiment. As shown in FIG. 2, the document conveyance portion 5 is provided above the image reading portion 4. The document conveyance portion 5 opens and closes in an up- and-down direction with respect to the image reading portion 4. The document conveyance portion 5 conveys a placed document toward a feed reading contact glass 41 (read-in position). The document conveyance portion 5 functions as a cover that presses down, from above, a document. The document conveyance portion 5 includes, in order from an upstream side in a document conveyance direction, a document tray 51, a feed roller 52, a document conveyance path 53, a plurality of conveyance roller pairs 54, an ejection roller pair 55, and an ejection tray 56.

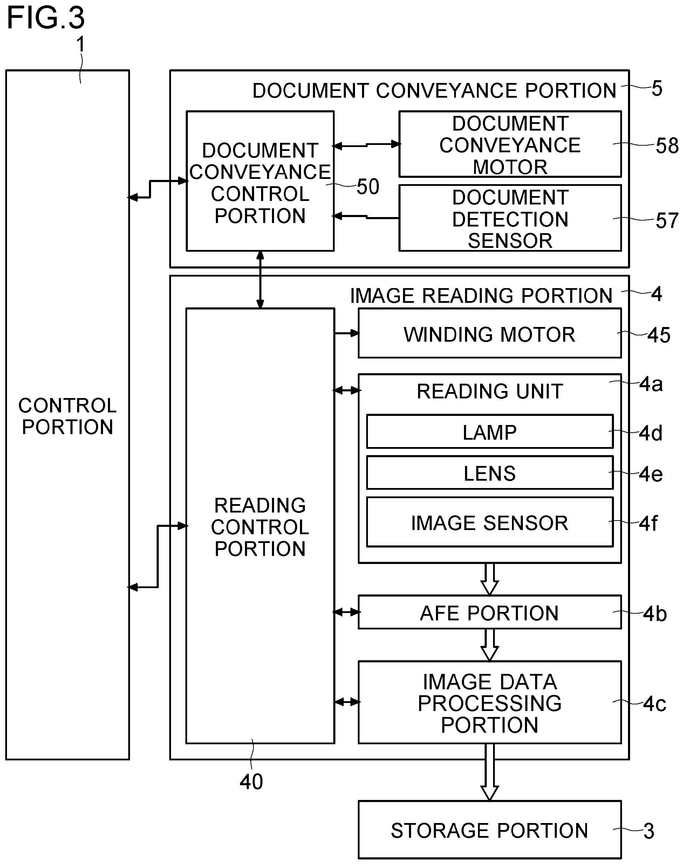

As shown in FIG. 3, the document conveyance portion 5 includes a document conveyance control portion 50. The document conveyance control portion 50 controls an operation of the document conveyance portion 5. The document conveyance control portion 50 is a substrate including a CPU and a memory storing control programs and data. The document conveyance control portion 50 is communicably connected to the control portion 1 and a reading control portion 40. From the control portion 1 and the reading control portion 40, the document conveyance control portion 50 receives an instruction to start conveyance of a document. Based on the instruction, the document conveyance control portion 50 controls an operation of conveying a document in the document conveyance portion 5.

A document detection sensor 57 is provided inside the document conveyance portion 5 (see FIG. 3). The document detection sensor 57 is a sensor that detects whether or not a paper sheet is present on the document tray 51. When an instruction to execute a job of reading in a document has been issued on the operation panel 6 (when the start key has been operated), the control portion 1 transmits an instruction to read in a document to the document conveyance control portion 50. A job such as copying or transmission is the job of reading in a document. The document conveyance control portion 50 checks an output of the document detection sensor 57. The document conveyance control portion 50 detects whether or not a paper sheet is present on the document tray 51. When a document is present on the document tray 51, the document conveyance control portion 50 controls a document conveyance motor 58 to be driven. As a result, the feed roller 52 and the conveyance roller pairs 54 are driven to rotate. The feed roller 52 and the conveyance roller pairs 54 convey the document to the read-in position. The document passes through an upper side of the feed reading contact glass 41 on an upper surface of the image reading portion 4. At the time of this passing, a reading unit 4a of the image reading portion 4 reads a surface of the document to generate image data. Hereinafter, reading-in of a document as conveyed by the document conveyance portion 5 is referred to as "feed reading-in".

As shown in FIG. 2, the image reading portion 4 has a box-shaped housing. Further, the feed reading contact glass 41 is provided at a left side on the upper surface of the image reading portion 4. A placement reading contact glass 42 is disposed on the upper surface of the image reading portion 4 and at a right side of the feed reading contact glass 41. These contact glasses have the shape of a transparent plate. A document such as a book is placed on the placement reading contact glass 42. The placement reading contact glass 42 functions as a table on which one page of a document is placed. When no document is placed in the document conveyance portion 5, the image reading portion 4 irradiates a document placed on the placement reading contact glass 42 with light. Based on reflection therefrom, the image reading portion 4 reads a surface of the document to generate image data. Hereinafter, reading-in of a document placed on the placement reading contact glass 42 is referred to as "table reading-in".

That is, when a document is placed in the document conveyance portion 5, the control portion 1 controls the image reading portion 4 to perform feed reading-in. When no document is placed in the document conveyance portion 5, the control portion 1 controls the image reading portion 4 to perform table reading-in.

The reading control portion 40 is provided in the image reading portion 4. The reading control portion 40 controls an operation of the image reading portion 4. The reading control portion 40 is a substrate including a CPU, a memory, an integrated circuit, and so on. Upon receiving an instruction or a signal from the control portion 1, the reading control portion 40 performs reading-in of a document. A configuration also may be adopted in which the reading control portion 40 is not provided, and the control portion 1 performs control of and processing at the image reading portion 4.

As shown in FIG. 2, the image reading portion 4 includes, inside the housing, the reading unit 4a, a wire 43, and a winding drum 44. The reading unit 4a is connected to the winding drum 44 via the wire 43. By a winding motor 45 (see FIG. 3) that rotates forward and backward, the winding drum 44 is driven to rotate. In a case of table reading-in, the reading control portion 40 controls the winding drum 44 to rotate. The reading control portion 40 controls the reading unit 4a to move in a horizontal direction. In a case of feed reading-in, the reading control portion 40 performs control so that the reading unit 4a is secured below the feed reading contact glass 41.

As shown in FIG. 3, inside the image reading portion 4, the reading unit 4a, an AFE portion 4b, and an image data processing portion 4c are provided. The reading unit 4a is a unit that reads a document by a CIS method (a unit employing a CCD method also may be used). The reading unit 4a includes a lamp 4d, a lens 4e, and an image sensor 4f.

The lamp 4d is a light source such as an LED or a cold cathode tube. The lamp 4d irradiates a document with light along a main scanning direction. In a case of reading in a document, the reading control portion 40 controls the lamp 4d to be turned on. In sync with the end of reading in the document, the reading control portion 40 controls the lamp 4d to be turned off.

The image sensor 4f is a line sensor in which light receiving elements are arranged along the main scanning direction. The image sensor 4f may be a type adapted for color reading, which includes line sensors of a plurality of colors. The image sensor 4f may be a monochrome type including only a line sensor for monochrome reading. The lens 4e guides reflection light from a document to the light receiving elements of the image sensor 4f.

Each of the light receiving elements of the image sensor 4f is configured so that the larger an amount of light it receives during a read-in period in which it reads in each line (electric charge accumulation period), the larger a voltage it outputs. An analog signal outputted by each of the light receiving elements of the image sensor 4f (reading unit 4a) is inputted to the AFE portion 4b (an analog front end). The AFE portion 4b processes the analog signal from the each of the light receiving elements. The AFE portion 4b converts the analog signal from the each of the light receiving elements into a digital value. The AFE portion 4b adjusts the analog signal by performing offset processing and amplification processing with respect thereto. The AFE portion 4b coverts an analog signal based on an output of each of the light receiving elements to an 8-bit or 10-bit digital value.

The image data processing portion 4c arranges digital values generated in the AFE portion 4b to generate image data per page. At this time, the image data processing portion 4c corrects a distortion in image density attributable to reading-in. For example, shading correction is performed. The image data per page generated by the image data processing portion 4c is transmitted to the storage portion 3. In a case of executing a job such as copying or transmission, image data stored in the storage portion 3 is read out. With respect to the image data thus read out, the image processing portion 12 performs image processing corresponding to setting performed on the operation panel 6. For example, in a transmission job, the image processing portion 12 performs conversion processing into a set file format such as PDF or JPEG.

In a copy job, based on image data after being subjected to the image processing, the control portion 1 controls the printing portion 2 to perform a printing job. Furthermore, in a transmission job, the control portion 1 controls the communication portion 7 to transmit, toward a set destination, image data after being subjected to the image processing. The control portion 1 performs control so that the image data is transmitted by a transmission method corresponding to the set destination. The printing portion 2 and the communication portion 7 function as a job execution portion that, based on image data obtained through reading-in of a document by the image reading portion 4, executes a job.

### (Setting of Destination)

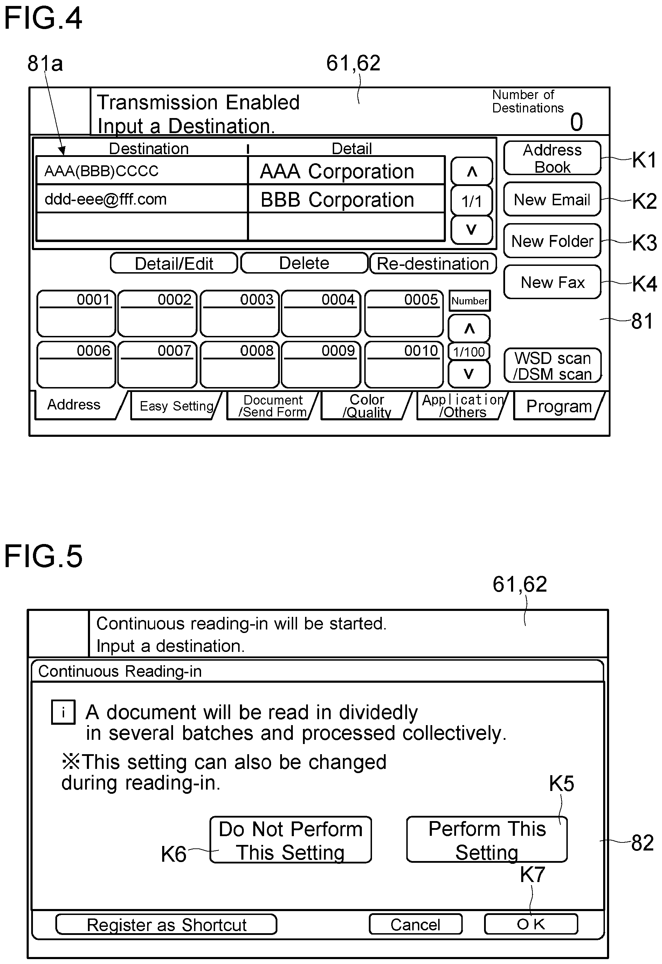

Next, with reference to FIG. 4, a description is given of one example of setting of a destination in a transmission job in the multi-functional peripheral 100 according to the embodiment. In a case of performing a transmission job, it is required to set a destination. A destination can be set on a transmission basic screen 81 shown in FIG. 4. When a prescribed operation has been performed on the operation panel 6 (touch panel 62 and hard keys 63), the control portion 1 controls the display panel 61 to display the transmission basic screen 81.

The multi-functional peripheral 100 is capable of transmitting image data by email, SMB, FTP, and facsimile. Which one of these transmission methods is used to transmit image data depends on a set destination. Based on the set destination, the control portion 1 recognizes one of the transmission methods. SMB is a function of transmitting image data to a shared folder of the computer 200 on a local network. FTP is a function of transmitting (uploading) image data, in accordance with the FTP protocol, to a folder of the server 300 (an FTP server) provided on a network.

In a case of transmitting an email message with image data attached thereto, a destination can be set from among email addresses registered in an address book. When an address book key K1 has been operated, the control portion 1 controls the display panel 61 to display an address book screen (not shown). The touch panel 62 and the hard keys 63 accept an operation of selecting an email address registered in the address book. The control portion 1 recognizes the email address thus selected as a destination.

Furthermore, it is also possible to input the email address. In this case, a user operates a new email key K2. When the new email key K2 has been operated, the control portion 1 controls the display panel 61 to display a software keyboard screen (not shown) for inputting letters, symbols, and numerals. The touch panel 62 and the hard keys 63 accept an input to set the email address made on the software keyboard screen. The control portion 1 recognizes the email address thus inputted as a destination.

In a case of transmitting image data by using the SMB function, a destination can be set from among pieces of SMB destination information registered in the address book. The SMB destination information includes information such as a host name and a path of the computer 200. When the address book key K1 has been operated, the control portion 1 controls the display panel 61 to display the address book screen (not shown). The touch panel 62 and the hard keys 63 accept an operation of selecting a folder of the computer 200 (SMB destination information) registered in the address book. The control portion 1 recognizes the thus selected folder of the computer 200 as a destination for the SMB transmission.

Furthermore, the destination for the SMB transmission (computer 200) can be set by manually inputting SMB destination information. In this case, a user operates a new folder key K3. When the new folder key K3 has been operated, the control portion 1 controls the display panel 61 to display a destination information setting screen (not shown). The touch panel 62 and the hard keys 63 accept an input to set information such as a host name and a path on the destination information setting screen. Based on the SMB destination information (destination) thus inputted, the control portion 1 recognizes a folder as a transmission destination.

In a case of transmitting image data by using the FTP function, the server 300 to which the image data is to be transmitted can be set from among pieces of FTP destination information registered in the address book. The FTP destination information includes information such as a name, an address, and a path of the server 300. When the address book key K1 has been operated, the control portion 1 controls the display panel 61 to display the address book screen (not shown). The touch panel 62 and the hard keys 63 accept an operation of selecting a folder of the server 300 (FTP destination information) registered in the address book. The control portion 1 recognizes the folder thus selected as a destination for the FTP transmission.

Furthermore, the destination for the FTP transmission (server 300) can be set by manually inputting FTP destination information. In this case, a user operates the new folder key K3. When the new folder key K3 has been operated, the control portion 1 controls the display panel 61 to display the destination information setting screen (not shown). The touch panel 62 and the hard keys 63 accept an input to set information such as a server name, an address, and a path of the server 300 on the destination information setting screen. Based on the FTP destination information (destination) thus inputted, the control portion 1 recognizes a folder as a transmission destination.

In a case of transmitting image data by facsimile, the fax machine 400 to which the image data is to be transmitted can be set from among facsimile numbers registered in the address book. When the address book key K1 has been operated, the control portion 1 controls the display panel 61 to display the address book screen (not shown). The touch panel 62 and the hard keys 63 accept an operation of selecting a facsimile number registered in the address book. The control portion 1 recognizes the facsimile number thus selected as a destination for the facsimile transmission.

The facsimile number can be set as a destination by manually inputting the facsimile number. In this case, a user operates a new fax key K4. When the new fax key K4 has been operated, the control portion 1 controls the display panel 61 to display the software keyboard screen (not shown) for inputting numerals. It is also possible to input the facsimile number by using the numeric keypad. The touch panel 62 and the hard keys 63 accept an input to set the facsimile number. The control portion 1 recognizes the facsimile number thus inputted as a destination for the facsimile transmission.

As described above, the operation panel 6 accepts a selection of a transmission method for a job to be executed and setting of a destination for a transmission job. The operation panel 6 accepts setting of a destination for facsimile transmission, a destination for email transmission, a destination for SMB transmission, and a destination for FTP transmission. Based on a transmission method for a job selected on the operation panel 6 or a destination set on the operation panel 6 in a transmission job, the control portion 1 controls the image reading portion 4 and the job execution portion (printing portion 2 and communication portion 7).

On the transmission basic screen 81, a plurality of destinations can be set. The control portion 1 performs control so that the destinations thus set are displayed in a destination display area 81a within the transmission basic screen 81. FIG. 4 shows one example of a state where an email address and a facsimile number are set as destinations. When a plurality of destinations have been set, the control portion 1 controls the communication portion 7 to transmit image data toward each of the destinations thus set by a transmission method corresponding to the each of the destinations.

### (Continuous Read-in Mode)

Next, with reference to FIG. 5 to FIG. 9, a description is given of one example of a continuous read-in mode incorporated in the multi-functional peripheral 100 according to the embodiment. In a copy job or a transmission job, reading-in of a document is performed. The multi-functional peripheral 100 has the continuous read-in mode. In a case of the continuous read-in mode, until an input to end reading-in is inputted to the operation panel 6, the control portion 1 performs control so that reading-in of a document as placed is continuously performed. After the input to end reading-in has been inputted to the operation panel 6, based on image data obtained through the reading-in of the document, the control portion 1 controls the job execution portion to perform a job.

In a case of performing feed reading-in without using the continuous read-in mode (i.e. in a normal mode), based on an output of the document detection sensor 57, until documents placed on the document tray 51 run out, the document conveyance portion 5 conveys the documents on a sheet-by-sheet basis in a continuous manner. The image reading portion 4 performs reading-in of each of the documents and generation of image data thereof. The control portion 1 controls the communication portion 7 to transmit collectively the image data of the placed documents toward a set destination. In a copy job, while performing reading-in of documents in a continuous manner, based on image data that has already been generated, the control portion 1 may control the printing portion 2 to start printing from a top page (processing in which reading-in and printing are performed in parallel).

In the normal mode and in a case of table reading-in, the image reading portion 4 reads in one sheet of document placed on the placement reading contact glass 42. In a transmission job, the control portion 1 controls the communication portion 7 to transmit image data of the one sheet of document toward a set destination. In a copy job, based on image data of the one sheet of document, the control portion 1 controls the printing portion 2 to perform printing.

The continuous read-in mode can be used by performing setting on the operation panel 6 (by a manual operation). The continuous read-in mode can be used in a desired job by performing setting for using the continuous read-in mode on the operation panel 6. For example, in a case where a document bundle is thicker than a maximum possible thickness of a document that can be placed in the document conveyance portion 5, a user places a document in the document conveyance portion 5 dividedly in a plurality of batches. The entire document bundle can be printed or transmitted as one copy.

When a prescribed operation has been performed on the operation panel 6, the control portion 1 controls the display panel 61 to display a manual setting screen 82 shown in FIG. 5. In the manual setting screen 82, a setting key K5 and a non-setting key K6 are provided. When an OK key K7 has been operated after an operation of the setting key K5, the control portion 1 recognizes that setting for using the continuous read-in mode has been performed. When the OK key K7 has been operated after an operation of the non-setting key K6, the control portion 1 recognizes that setting for using the normal mode has been performed. As described above, prior to a start of reading-in of a document, the operation panel 6 accepts setting of manual continuous reading-in in which the image reading portion 4 and the job execution portion are operated in the continuous read-in mode. In this case, the control portion 1 controls the image reading portion 4 and the job execution portion to operate in the continuous read-in mode. This control is performed regardless of what type of transmission method and what type of read-in method are used. In this manner, the image forming apparatus can be freely brought to the continuous read-in mode.

Conventionally, it has been the case that the use of the continuous read-in mode requires setting to be performed on the manual setting screen 82. For each job, it is required to perform the setting for using the continuous read-in mode. Furthermore, some users might forget to perform the setting for using the continuous read-in mode.

For example, it may be desired to perform table reading-in of a plurality of sheets of document and transmit collectively image data of a plurality of pages by facsimile. When it is forgotten to perform setting for using the continuous read-in mode, conventionally, it has been the case that facsimile transmission is performed upon table reading-in of only one page of a document. In this case, it becomes required to notify a communication partner that erroneous transmission has been performed. Furthermore, it is required to perform resetting of an item necessary for transmission such as a destination. It takes a lot of work and time to compensate for forgetting to perform setting of the continuous read-in mode. Particularly in facsimile transmission, which involves a communication cost, a transmission cost incurred for erroneous transmission is wasted.

To solve such an inconvenience, it is conceivable that the control portion 1 controls the multi-functional peripheral 100 to be always in the continuous read-in mode. In a case where the continuous read-in mode is applied in any type of job, the control portion 1 controls the image reading portion 4 and the document conveyance portion 5 to operate always in the continuous read-in mode. It may, however, not be desired to use the continuous read-in mode (it may sufficient to use the normal mode). For example, in a case of feed reading-in, there is rarely a case where a document bundle is so thick that it has to be placed dividedly in a plurality of batches. That is, in feed reading-in, in many cases, there is no need for the continuous read-in mode.

Furthermore, also in a case of table reading-in, the continuous read-in mode may not be required. For example, it may be desired to save image data of documents on a sheet-by-sheet basis. There is also a case where the number of sheets of image data that can be attached to an email message is limited. Furthermore, some users may consider the continuous read-in mode unnecessary in SMB transmission and FTP transmission.

In table reading-in, however, it may be desired that, in a particular transmission method, the multi-functional peripheral 100 be always in the continuous read-in mode. For example, from the viewpoint of a communication cost, some users may desire that, in facsimile transmission, image data of all documents be included in a communication performed once. Furthermore, there are also users who desire to transmit image data of all documents included collectively in one file by SMB transmission or FTP transmission.

Thus, in the multi-functional peripheral 100, when an automatic continuous read-in condition is satisfied, the control portion 1 performs control so that the image reading portion 4 and the job execution portion automatically operate in the continuous read-in mode. In other words, when the automatic continuous read-in condition is satisfied, the control portion 1 performs control so that the multi-functional peripheral 100 is automatically brought to the continuous read-in mode.

The automatic continuous read-in condition is that table reading-in has been started in a state where a destination corresponding to a particular transmission method that is a predetermined transmission method is set. In table reading-in, documents are read on a sheet-by-sheet basis, so that erroneous transmission in which image data of only one sheet is transmitted is likely to occur. Furthermore, in feed reading-in, in many cases, all documents can be placed at a time in the document conveyance portion 5. Thus, table reading-in is set as one part of the condition.

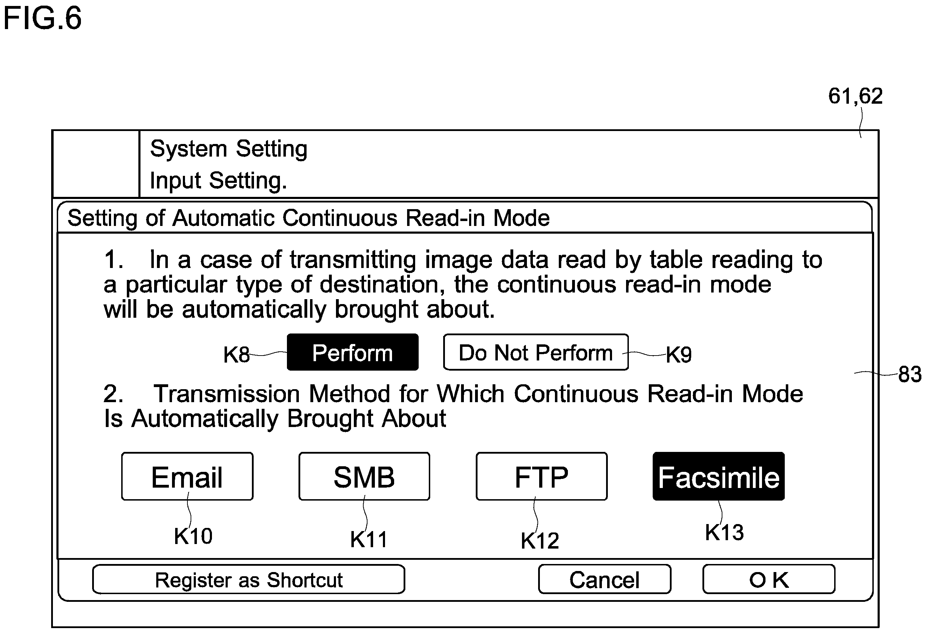

When an operation for displaying an automatic continuous read-in setting screen 83 has been performed on the operation panel 6, the control portion 1 controls the display panel 61 to display the automatic continuous read-in setting screen 83 shown in FIG. 6. In the automatic continuous read-in setting screen 83, an execution key K8 and a non-execution key K9 are provided. When an OK key K7 has been operated after an operation of the execution key K8, the control portion 1 recognizes that setting for automatically using the continuous read-in mode has been performed. That is, the operation panel 6 accepts setting for determining whether or not to bring about automatically the continuous read-in mode when the automatic continuous read-in condition is satisfied. In a case where the setting for automatically bringing about the continuous read-in mode has been performed, when the automatic continuous read-in condition is satisfied, the control portion 1 performs control so that the image reading portion 4 and the job execution portion automatically operate in the continuous read-in mode. When the OK key K7 has been operated after an operation of the non-execution key K9, the control portion 1 recognizes that setting for not using the continuous read-in mode even when the automatic continuous read-in condition is satisfied has been performed. As described above, a user can perform setting as to whether or not to bring about automatically the continuous read-in mode when the automatic continuous read-in condition is satisfied. The image forming apparatus, therefore, can be set so as to operate as desired by a user.

On the automatic continuous read-in setting screen 83, setting of a particular transmission method can be performed. The operation panel 6 accepts setting for using, as the particular transmission method, any one or plural ones of a plurality of types of transmission methods. The control portion 1 handles the transmission method(s) set on the operation panel 6 as the particular transmission method. This allows a user to set a specific content of the automatic continuous read-in condition. Any one or plural ones of the plurality of types (facsimile, email, SMB, and FTP) of transmission methods can be used as the particular transmission method. This makes it possible to perform setting of a method for transmission, in table reading-in for which, the image forming apparatus is brought to the continuous read-in mode. In the automatic continuous read-in setting screen 83, an email key K10, an SMB key K11, an FTP key K12, and a facsimile key K13 are provided. By using these four keys, a user can set a desired transmission method as the particular transmission method. The control portion 1 controls the display panel 61 to display a transmission method (key) selected by a touch gesture in a white/black inversion state. It is also possible to release a selected state by touching a display position of the key in the selected state. FIG. 6 shows one example of a state where facsimile transmission has been selected as the particular transmission method.

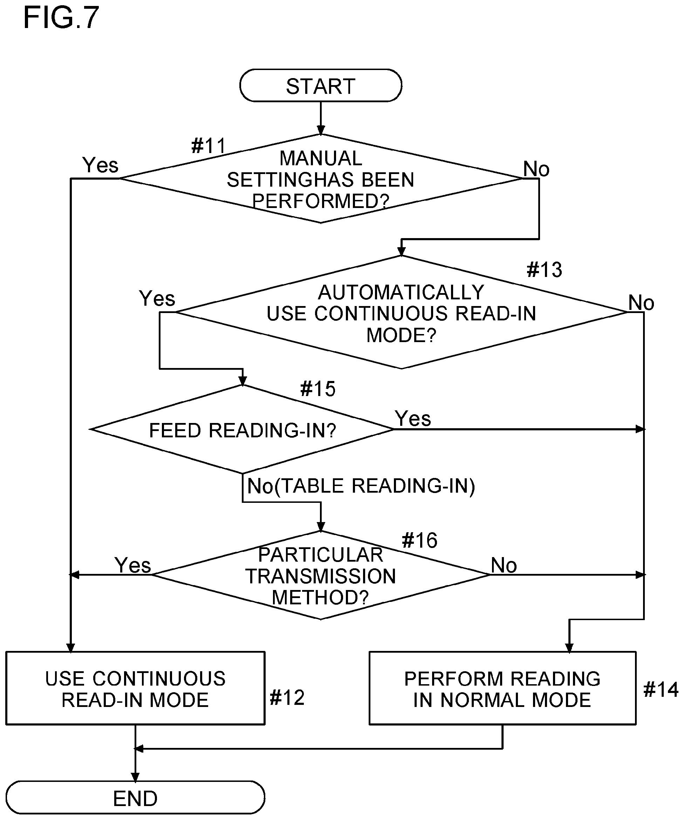

Next, with reference to FIG. 7, a description is given of one example of a flow of judging on the use of the continuous read-in mode in the multi-functional peripheral 100 according to the embodiment. "START" in FIG. 7 refers to a point in time when the start key is operated on the operation panel 6. It is a point in time when the control portion 1 recognizes that an instruction to start execution of a job involving reading-in of a document has been issued.

First, the control portion 1 checks whether or not, prior to an operation of the start key, setting for using the continuous read-in mode has been performed on the manual setting screen 82 (by a manual operation) (Step #11). When such setting has been performed, the continuous read-in mode should be applied. Thus, when the setting for using the continuous read-in mode has been manually performed (Yes at Step #11), the control portion 1 judges to use the continuous read-in mode (Step #12 → END).

When the setting for using the continuous read-in mode has not been manually performed (No at Step #11), the control portion 1 checks whether or not setting for automatically using the continuous read-in mode has been performed (Step #13). In other words, the control portion 1 checks whether or not the execution key K8 in the automatic continuous read-in setting screen 83 has been operated. When the setting for automatically using the continuous read-in mode has not been performed (No at Step #13), there is no need to apply the continuous read-in mode. In this case, the control portion 1 judges to perform reading in the normal mode (Step #14 → END). As a result, in a case where the setting for automatically bringing about the continuous read-in mode has not been performed, when feed reading-in or table reading-in is completed, based on image data obtained through the reading-in, the control portion 1 controls the job execution portion to operate.

When the setting for automatically using the continuous read-in mode has been performed (Yes at Step #13), based on an output of the document detection sensor 57, the control portion 1 judges whether or not to perform feed reading-in (Step #15). As mentioned earlier, when a document is placed in the document conveyance portion 5, the control portion 1 judges to perform feed reading-in. When no document is placed in the document conveyance portion 5, the control portion 1 judges to perform table reading-in.

In a case of performing feed reading-in (Yes at Step #15), the control portion 1 judges to perform reading in the normal mode (Step #14 → END). On the other hand, in a case of table reading-in (No at Step #15), the control portion 1 checks whether or not a destination(s) set on the operation panel 6 includes a destination corresponding to the particular transmission method (Step #16). In other words, based on the set destination(s), the control portion 1 checks whether or not a transmission job in progress is to be performed by the particular transmission method.

When the destination corresponding to the particular transmission method is included (Yes at Step #16), the control portion 1 judges to perform reading in the continuous read-in mode (Step #12 → END). In this manner, when the destination corresponding to the particular transmission method is set and table reading-in is performed, the control portion 1 automatically applies the continuous read-in mode. When the destination corresponding to the particular transmission method is not included (No at Step #16), the control portion 1 judges to perform reading in the normal mode without using the continuous read-in mode (Step #14 → END).

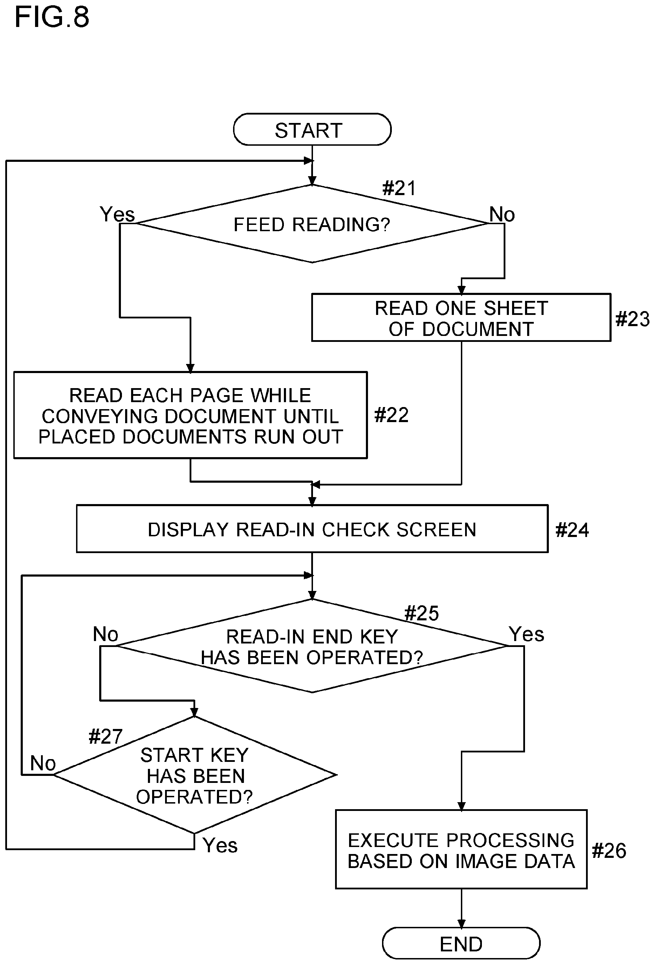

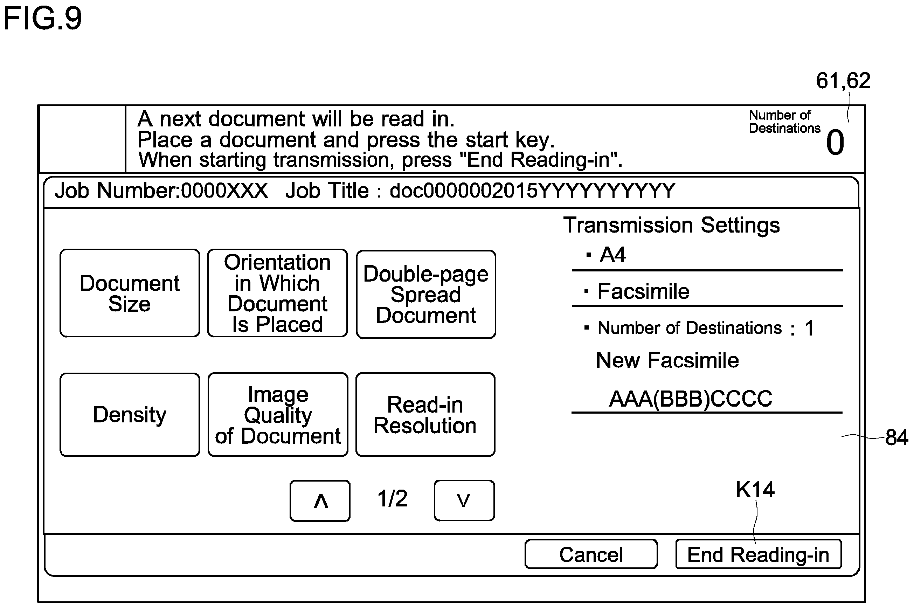

Next, with reference to FIG. 8 and FIG. 9, a description is given of one example of a flow of processing in a case where the continuous read-in mode is actually used. "START" in FIG. 8 refers to a point in time when, as a result of the automatic continuous read-in condition being satisfied or setting of manual continuous reading-in having been performed, reading-in of a document is started by using the continuous read-in mode.

First, the control portion 1 checks whether feed reading-in is to be performed to read a document or table reading-in is to be performed to read the document (Step #21). In a case where feed reading-in is to be performed (Yes at Step #21), the control portion 1 performs control so that the document conveyance portion 5 performs conveyance of a document until placed documents run out and the image reading portion 4 performs reading-in of each page thereof (Step #22). In a case where table reading-in is to be performed (No at Step #21), the control portion 1 controls the image reading portion 4 to perform reading-in of one sheet of document placed on the placement reading contact glass 42 (Step #23).

After Step #22 and Step #23, the control portion 1 controls the display panel 61 to display a read-in check screen 84 (Step #24). FIG. 9 shows one example of the read-in check screen 84. On the read-in check screen 84, a job number, a job title, part of a set content of a job, a transmission method, and a destination are displayed. FIG. 9 shows an example in which a facsimile number is displayed. On the read-in check screen 84, the operation panel 6 accepts an operation of changing setting of a job. For example, setting of a document size, a density, or a resolution can be changed. Further, in the read-in check screen 84, a read-in end key K14 is provided. The read-in end key K14 is a key that is operated to end reading-in of a document. In other words, the read-in end key K14 is a read-in end input key for ending reading-in of a document in the continuous read-in mode.

The control portion 1 checks whether or not the read-in end key K14 has been operated (whether or not an input to end reading-in has been made) (Step #25). When the read-in end key K14 has been operated (Yes at Step #25), the control portion 1 controls the image processing portion 12 and the printing portion 2 (in a case of a printing job) or the communication portion 7 (in a case of a transmission job) to perform processing based on image data obtained through reading-in (Step #26). Then, this flow is ended (END).

On the other hand, when the read-in end key K14 has not been operated (No at Step #25), the control portion 1 checks whether or not the start key has been operated for reading-in of a next document (Step #27). When the start key has been operated (Yes at Step #27), the flow returns to Step #21. In the continuous read-in mode, feed reading-in may be performed subsequent to table reading-in. Table reading-in also may be performed subsequent to feed reading-in. Therefore, in a case where the continuous read-in mode has been started, until an input to end reading-in is made, regardless of whether feed reading-in or table reading-in is performed, the control portion 1 performs control so that the continuous read-in mode is continued (a loop of Step #27 to Step #21). This allows image data of a plurality of pages to be transmitted always in one batch by the particular transmission method. When the start key has not been operated (No at Step #27), the flow returns to Step #25.

In table reading-in, a document is read on a page-by-page basis. In a case where the continuous read-in mode has not been set even though it is desired that image data of a plurality of pages be transmitted in one transmission job, transmission of image data is performed upon reading-in of only one page of a document. In such a case, it takes work to notify a transmission destination of erroneous transmission. Also, in a particular transmission form such as facsimile transmission, an additional communication cost is incurred. As a solution to this, the image forming apparatus (multi-functional peripheral 100) according to the embodiment is provided with the document conveyance portion 5, the image reading portion 4, the job execution portion (communication portion 7 and printing portion 2), the operation panel 6, and the control portion 1.

To be specific, the document conveyance portion 5 conveys a placed document toward a read-in position. The image reading portion 4 generates image data of the document. When a document is placed in the document conveyance portion 5, the image reading portion 4 performs feed reading-in in which the document as conveyed by the document conveyance portion 5 is read. When no document is placed in the document conveyance portion 5, the image reading portion 4 performs table reading-in in which a document placed on a table is read. Based on image data obtained through the reading-in of the document by the image reading portion 4, the job execution portion (communication portion 7 and printing portion 2) executes a job. The operation panel 6 accepts setting of a destination in a case of performing a transmission job. The control portion 1 controls the image reading portion 4 and the job execution portion. In the continuous read-in mode, until an input to end reading-in is inputted to the operation panel 6, the control portion 1 controls the image reading portion 4 (document conveyance portion 5) to perform continuously reading-in of a document as placed. After the input to end reading-in has been inputted to the operation panel 6, based on image data obtained through the reading-in of the document, the control portion 1 controls the job execution portion to perform a job. When the automatic continuous read-in condition is satisfied, the control portion 1 performs control so that the image reading portion 4 and the job execution portion automatically operate in the continuous read-in mode. The automatic continuous read-in condition is that table reading-in has been started in a state where a destination corresponding to the particular transmission method that is a predetermined transmission method is set.

In this manner, in a case of a transmission job of image data read by table reading-in and when a transmission method is used in which it is desired that image data of a plurality of pages be transmitted always collectively, the control portion 1 performs control so that the image forming apparatus is automatically brought to the continuous read-in mode. It is, therefore, possible to eliminate erroneous transmission in which image data is transmitted upon reading-in of only one page of a document by table reading-in. Based on a communication cost and convenience of a transmission destination, only when the particular transmission method is used, the continuous read-in mode can be automatically applied.

In a case where a destination corresponding to a method other than the particular transmission method is set, the image forming apparatus is not automatically brought to the continuous read-in mode. In other words, in a case of transmission in which erroneous transmission in which image data is transmitted upon reading-in of only one page of a document poses no problem, the image forming apparatus is not automatically brought to the continuous read-in mode. Also in a case of feed reading-in, the image forming apparatus is not automatically brought to the continuous read-in mode. This eliminates botheration of the continuous read-in mode being brought about even when unnecessary. Furthermore, setting for using the continuous read-in mode can be performed for any type of job. In order for the continuous read-in mode to be ended when unnecessary and for a job to be started, it is required to make an input to end reading-in. A user who has no desire to use the continuous read-in mode bothers to make an input to end reading-in for each job. With respect to this issue, the image forming apparatus is automatically brought to the continuous read-in mode only when necessary. This saves a user the trouble of making an unnecessary input to end reading-in.

While the foregoing has described the embodiment of the present disclosure, the scope of the present disclosure is not limited thereto, but by the scope of the following claims.

For example, the foregoing has explained that, on the automatic continuous read-in setting screen 83, a selection of the particular communication method can be made. A configuration, however, also may be adopted in which facsimile is always handled as the particular communication method. In this case, when a destination(s) set in a case of table reading-in includes a facsimile number, the control portion 1 performs control so that the multi-functional peripheral 100 is always automatically brought to the continuous read-in mode.

In this specification, a description of a method or a method step shall be understood also as a description of means for implementing the respective method or step thereof, and vice versa. Features shall be deemed combinable with each other also if their combination is not expressly mentioned, to the extent that the combination is technically feasible. Features described in a certain combination, context, embodiment, claim or figure shall be understood as usable also in another combination, context, embodiment, claim or figure, to the extent that this is feasible.

## Claims

1. An image forming apparatus comprising:
a document conveyance portion (5) that conveys a placed document toward a read-in position;
an image reading portion (4) that performs, when a document is placed in the document conveyance portion (5), feed reading-in in which the document as conveyed by the document conveyance portion (5) is read, while performing, when no document is placed in the document conveyance portion (5), table reading-in in which a document placed on a table is read, and generates image data of the document;
a job execution portion (7) that, based on the image data obtained through the reading-in of the document by the image reading portion (4), executes a job;
an operation panel (6) that accepts setting of a destination in a case of performing a transmission job and that accepts setting for using, as a particular transmission method to which a continuous read-in mode is applied automatically, any one or plural ones of a plurality of types of transmission methods; and
a control portion (1) that controls the image reading portion (4) and the job execution portion (7) so that, in the continuous read-in mode, the image reading portion (4) continuously performs reading-in of a document as placed until an input to end reading-in is inputted to the operation panel (6), and after the input to end reading-in has been inputted to the operation panel (6), based on image data obtained through the reading-in of the document, the job execution portion (7) performs a job, and so that when an automatic continuous read-in condition is satisfied, the image reading portion (4) and the job execution portion (7) automatically operate in the continuous read-in mode,
the control portion (1) handling the any one or plural ones of a plurality of types of transmission methods set on the operation panel (6) as the particular transmission method,
the control portion (1) checking whether or not the transmission job is to be performed by the particular transmission method based on the destination set on the operation panel (6),
wherein
the automatic continuous read-in condition is that the table reading-in has been started in a state where the destination corresponding to the predetermined transmission method is set.

2. The image forming apparatus according to claim 1, wherein
after a start of the continuous read-in mode, until the input to end reading-in is made, regardless of whether the feed reading-in or the table reading-in is performed, the control portion (1) performs control so that the continuous read-in mode is continued.

3. The image forming apparatus according to claim 1 or 2, wherein
the operation panel (6) accepts setting for determining whether or not to bring about automatically the continuous read-in mode when the automatic continuous read-in condition is satisfied,
in a case where the setting for automatically bringing about the continuous read-in mode has been performed, when the automatic continuous read-in condition is satisfied, the control portion (1) performs control so that the image reading portion (4) and the job execution portion (7) automatically operate in the continuous read-in mode, and
in a case where the setting for automatically brining about the continuous read-in mode has not been performed, upon completion of the feed reading-in or the table reading-in, based on image data obtained through the reading-in, the control portion (1) controls the job execution portion (7) to operate.

4. The image forming apparatus according to any one of claims 1 to 3, wherein
the operation panel (6) accepts setting of a destination for facsimile transmission, a destination for email transmission, a destination for SMB transmission, and a destination for FTP transmission, and setting for using, as the particular transmission method, any one or plural ones from among facsimile, email, SMB, and FTP.

5. The image forming apparatus according to any one of claims 1 to 4, wherein
prior to a start of reading-in of a document, the operation panel (6) accepts setting of manual continuous reading-in in which the image reading portion (4) and the job execution portion (7) are operated in the continuous read-in mode, and
in a case where the setting of manual continuous reading-in has been performed, regardless of what type of transmission method is used and which of the feed reading-in and the table reading-in is performed, the control portion (1) controls the image reading portion (4) and the job execution portion (7) to operate in the continuous read-in mode.

6. The image forming apparatus according to any one of claims 1 to 5, further comprising:
a display panel (61) that displays a screen,
wherein in the continuous read-in mode, the control portion (1) controls the display panel (61) to display a read-in check screen (84), and performs control so that a job number, a job title, a set content of a job, a transmission method, and a destination are displayed on the read-in check screen (84).

7. The image forming apparatus according to claim 6, wherein
the operation panel (6) accepts an operation of changing setting of a job, which is performed on the read-in check screen (84).

8. A method for controlling an image forming apparatus, comprising steps of:
conveying a placed document toward a read-in position;
performing, when a document is placed in a document conveyance portion (5), feed reading-in in which the document as conveyed by the document conveyance portion (5) is read, while performing, when no document is placed in the document conveyance portion (5), table reading-in in which a document placed on a table is read, and generating image data of the document;
based on the image data obtained through the reading-in of the document, executing a job;
accepting setting of a destination in a case of performing a transmission job;
accepting setting for using, as a particular transmission method to which a continuous read-in mode is applied automatically, any one or plural ones of a plurality of types of transmission methods;
in the continuous read-in mode, continuously performing reading-in of a document as placed until an input to end reading-in is inputted;
after the input to end reading-in has been inputted, based on image data obtained through the reading-in of the document, performing a job;
checking whether or not the transmission job is to be performed by the particular transmission method based on the set destination;
when an automatic continuous read-in condition is satisfied, automatically bringing about the continuous read-in mode; and
setting, as the automatic continuous read-in condition, a condition that the table reading-in has been started in a state where the destination corresponding to the predetermined transmission method is set.

## Patentansprüche

1. Bilderzeugungsvorrichtung, umfassend:
einen Dokumententransportabschnitt (5), der ein eingelegtes Dokument in Richtung einer Einleseposition transportiert;
einen Bildleseabschnitt (4), der, wenn ein Dokument in den Dokumententransportabschnitt (5) eingelegt ist, ein Einzugeinlesen durchführt, bei dem das Dokument gelesen wird, während es von dem Dokumententransportabschnitt (5) transportiert wird, und der, wenn kein Dokument in den Dokumententransportabschnitt (5) eingelegt ist, ein Flachbetteinlesen durchführt, bei dem ein auf einem Flachbett liegendes Dokument gelesen wird, und der Bilddaten des Dokuments erzeugt;
einen Auftragsausführungsabschnitt (7), der auf der Grundlage der durch das Einlesen des Dokuments durch den Bildleseabschnitt (4) erhaltenen Bilddaten einen Auftrag ausführt;
ein Bedienfeld (6), das im Falle der Durchführung eines Übertragungsauftrags die Einstellung eines Ziels akzeptiert und das die Einstellung akzeptiert, dass als ein bestimmtes, bei einem kontinuierlichen Einlesemodus automatisch anzuwendendes Übertragungsverfahren eines oder mehrere aus einer Mehrzahl von Typen von Übertragungsverfahren verwendet wird; und
einen Steuerabschnitt (1), der den Bildleseabschnitt (4) und den Auftragsausführungsabschnitt (7) steuert, so dass in dem kontinuierlichen Einlesemodus der Bildleseabschnitt (4) kontinuierlich das Einlesen eines Dokuments so wie eingelegt durchführt, bis eine Eingabe zum Beenden des Einlesens in das Bedienfeld (6) eingegeben wird, und nachdem die Eingabe zum Beenden des Einlesens in das Bedienfeld (6) eingegeben worden ist, der Auftragsausführungsabschnitt (7) einen Auftrag auf der Grundlage von durch das Einlesen des Dokuments erhaltenen Bilddaten ausführt, und so dass, wenn eine Bedingung für automatisches kontinuierliches Einlesen erfüllt ist, der Bildleseabschnitt (4) und der Auftragsausführungsabschnitt (7) automatisch in dem kontinuierlichen Einlesemodus arbeiten,
wobei der Steuerabschnitt (1) das eine oder die mehreren aus einer Mehrzahl von Typen von Übertragungsverfahren, die auf dem Bedienfeld (6) eingestellt sind, als das bestimmte Übertragungsverfahren behandelt,
wobei der Steuerabschnitt (1) auf der Grundlage des auf dem Bedienfeld (6) eingestellten Ziels prüft, ob der Übertragungsauftrag mit dem bestimmten Übertragungsverfahren durchgeführt werden soll oder nicht,
wobei
die Bedingung für automatisches kontinuierliches Einlesen ist, dass das Flachbetteinlesen in einem Zustand gestartet wurde, in dem das dem vorgegebenen Übertragungsverfahren entsprechende Ziel eingestellt ist.

2. Bilderzeugungsvorrichtung nach Anspruch 1, bei der
nach einem Start des kontinuierlichen Einlesemodus, bis die Eingabe zum Beenden des Einlesens erfolgt, der Steuerabschnitt (1) unabhängig davon, ob das Einzugeinlesen oder das Flachbetteinlesen durchgeführt wird, eine Steuerung so durchführt, dass der kontinuierliche Einlesemodus fortgesetzt wird.

3. Bilderzeugungsvorrichtung nach Anspruch 1 oder 2, bei der
das Bedienfeld (6) eine Einstellung akzeptiert, um festzulegen, ob, wenn die Bedingung für automatisches kontinuierliches Einlesen erfüllt ist, der kontinuierliche Einlesemodus automatisch herbeigeführt werden soll oder nicht,
in einem Fall, in dem die Einstellung zum automatischen Herbeiführen des kontinuierlichen Einlesemodus vorgenommen wurde, der Steuerabschnitt (1), wenn die automatische kontinuierliche Einlesebedingung erfüllt ist, eine Steuerung so durchführt, dass der Bildleseabschnitt (4) und der Auftragsausführungsabschnitt (7) automatisch in dem kontinuierlichen Einlesemodus arbeiten, und
in einem Fall, in dem die Einstellung zum automatischen Herbeiführen des kontinuierlichen Einlesemodus nicht vorgenommen wurde, nach Beendigung des Einzugeinlesens oder des Flachbetteinlesens der Steuerabschnitt (1) den Betrieb des Aufgabenausführungsabschnitts (7) auf der Grundlage von durch das Einlesen erhaltenen Bilddaten steuert.

4. Bilderzeugungsvorrichtung nach einem der Ansprüche 1 bis 3, bei der
das Bedienfeld (6) die Einstellung eines Ziels für die Faksimile-Übertragung, eines Ziels für die E-Mail-Übertragung, eines Ziels für die SMB-Übertragung und eines Ziels für die FTP-Übertragung und die Einstellung eines beliebigen oder mehrerer Verfahren aus Faksimile, E-Mail, SMB und FTP als das bestimmte Übertragungsverfahren akzeptiert.

5. Bilderzeugungsvorrichtung nach einem der Ansprüche 1 bis 4, bei der
vor Beginn des Einlesens eines Dokuments das Bedienfeld (6) die Einstellung des manuellen kontinuierlichen Einlesens akzeptiert, bei dem der Bildleseabschnitt (4) und der Auftragsausführungsabschnitt (7) im kontinuierlichen Einlesemodus betrieben werden, und
in einem Fall, in dem die Einstellung des manuellen kontinuierlichen Einlesens vorgenommen wurde, unabhängig davon, welche Art von Übertragungsverfahren verwendet wird und welches von Einzugeinlesen und Flachbetteinlesen durchgeführt wird, der Steuerabschnitt (1) den Bildleseabschnitt (4) und den Auftragsausführungsabschnitt (7) steuert , um in dem kontinuierlichen Einlesemodus zu arbeiten.

6. Bilderzeugungsvorrichtung nach einem der Ansprüche 1 bis 5, die ferner umfasst:
ein Anzeigefeld (61), das einen Bildschirm anzeigt,
wobei in dem kontinuierlichen Einlesemodus der Steuerabschnitt (1) das Anzeigefeld (61) steuert, um einen Einleseprüfbildschirm (84) anzuzeigen, und eine Steuerung durchführt, so dass eine Auftragsnummer, ein Auftragstitel, ein Einstellinhalt eines Auftrags, ein Übertragungsverfahren und ein Ziel auf dem Einleseprüfbildschirm (84) angezeigt werden.

7. Bilderzeugungsvorrichtung nach Anspruch 6, bei der
das Bedienfeld (6) eine Operation zum Ändern der Einstellung eines Auftrags akzeptiert, die auf dem Einleseprüfbildschirm (84) durchgeführt wird.

8. Verfahren zum Steuern einer Bilderzeugungsvorrichtung, das die folgenden Schritte umfasst:
Transportieren eines eingelegten Dokuments in Richtung einer Einleseposition;
wenn ein Dokument in einen Dokumententransportabschnitt (5) eingelegt ist, Durchführen eines Einzugeinlesens, bei dem das Dokument gelesen wird, während es von dem Dokumententransportabschnitt (5) transportiert wird, und, wenn kein Dokument in den Dokumententransportabschnitt (5) eingelegt ist, Durchführen eines Flachbetteinlesens, bei dem ein auf einem Flachbett liegendes Dokument gelesen wird, und Erzeugen von Bilddaten des Dokuments;
Ausführen eines Auftrags auf der Grundlage der durch das Einlesen des Dokuments erhaltenen Bilddaten;
im Fall der Ausführung eines Übertragungsauftrags Akzeptieren der Eingabe eines Ziels;
Akzeptieren der Eingabe, dass als ein bestimmtes Übertragungsverfahren, auf das ein kontinuierlicher Einlesemodus automatisch angewandt wird, irgendeines oder mehrere aus einer Mehrzahl von Typen von Übertragungsverfahren verwendet werden;
in dem kontinuierlichen Einlesemodus, kontinuierliches Durchführen des Einlesens eines Dokuments wie eingelegt, bis eine Eingabe zum Beenden des Einlesens eingegeben wird;
nachdem die Eingabe zum Beenden des Einlesens eingegeben worden ist, Durchführen eines Auftrags auf der Grundlage von durch das Einlesen des Dokuments erhaltenen Bilddaten;
Prüfen, auf der Grundlage des eingestellten Ziels, ob der Übertragungsauftrag durch das bestimmte Übertragungsverfahren durchgeführt werden soll oder nicht;
wenn eine Bedingung für automatisches kontinuierliches Einlesen erfüllt ist, automatisches Herbeiführen des kontinuierlichen Einlesemodus; und
Einstellen, als Bedingung für automatisches kontinuierliches Einlesen, einer Bedingung, dass das Flachbetteinlesen in einem Zustand gestartet wurde, in dem das dem vorgegebenen Übertragungsverfahren entsprechende Ziel eingestellt ist.

## Revendications

1. Appareil de formation d'images comprenant :
une partie de transport de document (5) qui transporte un document placé vers une position de lecture ;
une partie de lecture d'image (4) qui effectue, lorsqu'un document est placé dans la partie de transport de document (5), une lecture de passage dans laquelle le document est lu tout en étant transporté par la partie de transport de document (5) et qui effectue, lorsqu'aucun document n'est placé dans la partie de transport de document (5), une lecture sur tableau dans laquelle un document placé sur un tableau est lu, et qui génère des données d'image du document ;
une partie d'exécution de tâche (7) qui exécute une tâche en fonction des données d'image obtenues par la lecture du document par la partie de lecture d'image (4) ;
un panneau de commande (6) qui accepte la définition d'une destination lorsqu'une tâche de transmission est exécutée et qui accepte la définition d'un ou plusieurs types de méthodes de transmission à utiliser en tant que méthode de transmission particulière à laquelle un mode de lecture en continu est appliqué automatiquement; et
une partie de commande (1) qui commande la partie de lecture d'image (4) et la partie d'exécution de tâche (7) de sorte que, dans le mode de lecture en continu, la partie de lecture d'image (4) effectue en continu la lecture d'un document tel que placé jusqu'à ce qu'une commande de fin de lecture soit saisie sur le panneau de commande (6), et que, après que la commande de fin de lecture ait été saisie sur le panneau de commande (6), en fonction des données d'image obtenues par la lecture du document, la partie d'exécution de tâche (7) exécute une tâche, et de sorte que lorsqu'une condition de lecture en continu automatique est satisfaite, la partie de lecture d'image (4) et la partie d'exécution de tâche (7) fonctionnent automatiquement en mode de lecture en continu,
la partie de commande (1) traitant l'un quelconque ou lesdits plusieurs d'une pluralité de types de méthodes de transmission défini(s) sur le panneau de commande (6) comme la méthode de transmission particulière,
la partie de commande (1) vérifiant si la tâche de transmission doit être effectuée ou non par la méthode de transmission particulière en fonction de la destination définie sur le panneau de commande (6),
dans lequel
la condition de lecture en continu automatique est que la lecture sur tableau ait été lancée dans un état où la destination correspondant à la méthode de transmission prédéterminée est définie.

2. Appareil de formation d'images selon la revendication 1, dans lequel
après un démarrage du mode de lecture en continu, jusqu'à ce que la saisie pour terminer la lecture soit effectuée, indépendamment du fait que la lecture effectuée soit la lecture de passage ou la lecture sur tableau, la partie de commande (1) effectue une commande de sorte que le mode de lecture en continu soit poursuivi.

3. Appareil de formation d'images selon la revendication 1 ou 2, dans lequel
le panneau de commande (6) accepte une définition pour déterminer s'il faut ou non déclencher automatiquement le mode de lecture en continu lorsque la condition de lecture en continu automatique est satisfaite,
dans un cas où la définition pour déclencher automatiquement le mode de lecture en continu a été effectuée, lorsque la condition de lecture en continu automatique est satisfaite, la partie de commande (1) effectue une commande de sorte que la partie de lecture d'image (4) et la partie d'exécution de tâche (7) fonctionnent automatiquement dans le mode de lecture en continu, et
dans le cas où la définition pour déclencher automatiquement le mode de lecture en continu n'a pas été effectuée, à la fin de la lecture de passage ou de la lecture sur tableau, en fonction des données d'image obtenues par la lecture, la partie de commande (1) commande le fonctionnement de la partie d'exécution de tâche (7).

4. Appareil de formation d'images selon l'une quelconque des revendications 1 à 3, dans lequel
le panneau de commande (6) accepte la définition d'une destination pour la transmission par télécopie, d'une destination pour la transmission par courrier électronique, d'une destination pour la transmission par SMB et d'une destination pour la transmission par FTP, et la définition pour utiliser, en tant que méthode de transmission particulière, une ou plusieurs méthodes parmi la télécopie, le courrier électronique, SMB et FTP.

5. Appareil de formation d'images selon l'une quelconque des revendications 1 à 4, dans lequel
avant le début de la lecture d'un document, le panneau de commande (6) accepte la définition de lecture en continu manuelle dans laquelle la partie de lecture d'image (4) et la partie d'exécution de tâche (7) fonctionnent dans le mode de lecture en continu, et
dans le cas où la définition de lecture en continu manuelle a été effectuée, quel que soit le type de méthode de transmission utilisé et lequel parmi la lecture de passage et la lecture sur tableau soit effectué, la partie de commande (1) commande la partie de lecture d'image (4) et la partie d'exécution de tâche (7) pour fonctionner dans le mode de lecture en continu.

6. Appareil de formation d'images selon l'une quelconque des revendications 1 à 5, comprenant en outre :
un panneau d'affichage (61) qui affiche un écran,
dans lequel, dans le mode de lecture en continu, la partie de commande (1) commande le panneau d'affichage (61) pour afficher un écran de vérification de lecture (84), et effectue une commande de sorte qu'un numéro de tâche, un titre de tâche, un contenu défini d'une tâche, une méthode de transmission et une destination soient affichés sur l'écran de vérification de lecture (84).

7. Appareil de formation d'images selon la revendication 6, dans lequel
le panneau de commande (6) accepte une opération de changement de définition d'une tâche, qui est effectuée sur l'écran de vérification de lecture (84).

8. Procédé de commande d'un appareil de formation d'images, comprenant les étapes consistant à :
transporter un document placé vers une position de lecture ;
effectuer, lorsqu'un document est placé dans une partie de transport de document (5), une lecture de passage dans laquelle le document est lu tout en étant transporté par la partie de transport de document (5), et, lorsqu'aucun document n'est placé dans la partie de transport de document (5), une lecture sur tableau dans laquelle un document placé sur un tableau est lu, et générer des données d'image du document ;
en fonction des données d'image obtenues par la lecture du document, exécuter une tâche ;
accepter la définition d'une destination lorsqu'une tâche de transmission est exécutée ;
accepter la définition d'utiliser, en tant que méthode de transmission particulière à laquelle un mode de lecture en continu est appliqué automatiquement, l'un quelconque ou plusieurs types de méthodes de transmission parmi une pluralité de types de méthodes de transmission ;
dans le mode de lecture en continu, effectuer en continu la lecture d'un document tel que placé jusqu'à ce qu'une commande de fin de lecture soit saisie ;
après que la commande de fin de lecture ait été saisie, en fonction des données d'image obtenues par la lecture du document, exécuter une tâche ;
vérifier si la tâche de transmission doit être exécutée ou non par la méthode de transmission particulière en fonction de la destination définie ;
lorsqu'une condition de lecture en continu automatique est satisfaite, déclencher automatiquement le mode de lecture en continu ; et
définir, en tant que condition de lecture en continu automatique, une condition selon laquelle la lecture sur tableau a été lancée dans un état où la destination correspondant à la méthode de transmission prédéterminée est définie.
